# EUROPÄISCHE PATENTANMELDUNG

(11) **EP 1 332 897 A2**
(43) Veröffentlichungstag der Anmeldung: **06.08.2003**
(21) Anmeldenummer: 02026288.7
(22) Anmeldetag: 27.11.2002
(51) Int. Cl.: B60H 1/22

(54) **Wärmetauscheranordnung für ein Heizgerät, insbesondere Standheizung oder Zusatzheizer für ein Fahrzeug**

(30) Priorität: 31.01.2002 DE 10203915; 02.08.2002 DE 10235601
(71) Anmelder: J. Eberspächer GmbH & Co. KG, 73730 Esslingen (DE)
(72) Erfinder: Humburg, Michael, 73035 Göppingen (DE); Alund, Olof, 4611 Trollhättan (NO)

(57) **Zusammenfassung**

Eine Wärmetauscheranordnung für ein Heizgerät, insbesondere Standheizung oder Zusatzheizer eines Fahrzeugs, umfasst ein erstes Gehäuse (32), welches mit einem Bodenbereich (36) und einem ersten Wandungsbereich (34) eine Wärmequelle (12, 28) wenigstens bereichsweise umgebend zu positionieren ist, wobei an einer von der Wärmequelle (12, 28) abgewandten Außenseite des Bodenbereichs (36) ein Thermostromgenerator (42) vorgesehen ist.

## Beschreibung

Die vorliegende Erfindung betrifft eine Wärmetauscheranordnung für ein Heizgerät, insbesondere eine Wärmetauscheranordnung, welche bei einem als Standheizung oder Zusatzheizer eingesetzten Heizgerät in einem Fahrzeug eingesetzt werden kann.

Durch ständig steigende Anforderungen an den Komfort und auch bedingt durch die technischen Anforderungen neuerer Antriebsaggregate, wie z. B. Dieselbrennkraftmotoren, besteht zunehmend das Erfordernis, zusätzliche Heizgeräte in Fahrzeuge, wie z. B. Personenkraftfahrzeuge, Lastkraftwagen oder dergleichen, zu integrieren. Dabei bestehen neben den möglichst gering zu haltenden Kosten zwei den Aufbau derartiger Heizgeräte bzw. von Systemkomponenten derselben wesentlich beeinflussende Anforderungen. Dies ist zum einen die Beanspruchung von möglichst wenig Bauraum, und ist zum anderen die Möglichkeit, derartige Heizgeräte in einfacher Art und Weise in verschiedenen Anwendungsbereichen zum Einsatz bringen zu können bzw. für verschiedene Anwendungsbereiche konfigurieren zu können. Es finden daher zunehmend modulartig aufgebaute Heizgeräte Anwendung, bei welchen zur Anpassung an verschiedene Systemanforderungen verschiedene Bereiche, wie z. B. der Wärmetauscher, der Brenner an sich, das Luftfördergebläse, das Steuergerät usw. als einzelne Module bereitgestellt werden und, je nach geforderter Leistung, dann verschiedenartig aufgebaute Module zusammengefügt werden. Durch den modulartigen Aufbau können die für eine bestimmte Anforderung optimalen Systemkomponenten zusammengefügt werden. Insbesondere hinsichtlich des benötigten Bauraums ist es jedoch bei allen Varianten ein wesentliches Ziel, die beispielsweise auch für verschiedene Leistungen oder Anforderungen ausgebildeten Module möglichst gleich groß auszugestalten.

Ein weiteres Ziel beim Aufbau bzw. bei der Integration derartiger Heizgeräte ist es, das System, in welches das Heizgerät eingegliedert wird, so wenig als möglich zu belasten. Ein wesentlicher Grund hierfür ist, dass derartige Heizgeräte oftmals dann in Betrieb gesetzt werden, wenn auch andere Energieverbraucher das Spannungsnetz eines Fahrzeugs vergleichsweise stark belasten. Im Allgemeinen werden vor allem Zusatzheizer in der Startphase zur schnelleren Erwärmung eingesetzt. In dieser Phase sind im Allgemeinen jedoch auch Verbraucher wie die Front- oder Heckscheibenheizung aktiviert.

Es ist die Aufgabe der vorliegenden Erfindung, eine Wärmetauscheranordnung für ein Heizgerät bzw. ein eine derartige Wärmetauscheranordnung aufweisendes Heizgerät bereitzustellen, welches bei guter Integrationseigenschaft eine Entlastung des aufnehmenden Systems bereitstellen kann.

Gemäß der vorliegenden Erfindung wird diese Aufgabe gelöst durch eine Wärmetauscheranordnung für ein Heizgerät, insbesondere Standheizung oder Zusatzheizer eines Fahrzeugs, umfassend ein erstes Gehäuse, welches mit einem Bodenbereich und einem ersten Wandungsbereich eine Wärmequelle wenigstens bereichsweise umgebend zu positionieren ist, wobei an einer von der Wärmequelle abgewandten Außenseite des Bodenbereichs ein Thermostromgenerator vorgesehen ist.

Bei der erfindungsgemäßen Ausgestaltung ist also im Bereich der Wärmetauscheranordnung ein Thermostromgenerator vorgesehen, welcher das vor allem im Bereich der Wärmetauscheranordnung vorhandene Temperaturgefälle zur Erzeugung elektrischer Energie ausnutzen kann und somit wenigstens zum Teil den Energiebedarf eines Heizgerätes decken kann. Durch das Positionieren im Bodenbereich wird der Thermostromgenerator in einem Abschnitt vorgesehen, in welchem ohne wesentliche Beeinträchtigung der Gesamtbaugröße einer Wärmetauscheranordnung, also insbesondere in radialer Richtung bezogen auf eine Längsachse derselben, Bauraum zur Verfügung gestellt werden kann.

Beispielsweise kann bei der erfindungsgemäßen Wärmetauscheranordnung vorgesehen sein, dass der Bodenbereich zusammen mit einem zweiten Wandungsbereich eine den Thermostromgenerator wenigstens teilweise aufnehmende topfartige Struktur bildet. Hier kann eine sehr einfach aufzubauende Ausgestaltung dadurch erlangt werden, dass der zweite Wandungsbereich im Wesentlichen in Verlängerung des ersten Wandungsbereichs vorgesehen ist.

Um dafür zu sorgen, dass der Thermostromgenerator insbesondere durch das zu erwärmende Fluid nicht beeinträchtigt bzw. beschädigt wird, wird vorgeschlagen, dass ein Abschlusselement vorgesehen ist, welches die den Thermostromgenerator enthaltende topfartige Strukturabschließt. Beispielsweise kann vorgesehen sein, dass das Abschlusselement in Zusammenwirkung mit dem zweiten Wandungsbereich einen fluiddichten Abschluss bildet.

Die erfindungsgemäße Wärmetauscheranordnung kann weiter ein zweites Gehäuse aufweisen, welches das erste Gehäuse wenigstens bereichsweise umgebend angeordnet ist und mit dem ersten Gehäuse einen von zu erwärmendem Fluid zu durchströmenden Raumbereich bildet.

Das Abschlusselement kann an dem zweiten Gehäuse unter Beibehalt eines Fluidströmungsweges anliegen. Es ist somit sowohl für eine mechanische Abstützung als auch eine wärmeübertragungsmäßigen Kontaktierung gesorgt.

Um eine elektrische Kontaktierung des Thermostromgenerators bereitstellen zu können, wird vorgeschlagen, dass das Abschlusselement einen durch das zweite Gehäuse hindurchführenden Anschlussleitungsführungsbereich aufweist. Beispielsweise kann vorgesehen sein, dass der Anschlussleitungsführungsbereich von dem Abschlusselement vorspringend ausgebildet ist und in eine Öffnung eines Bodenbereichs des zweiten Gehäuses unter Erzeugung eines fluiddichten Abschlusses des Raumbereichs eingreift.

Der Thermostromgenerator kann wenigstens ein Peltierelement aufweisen, wobei vorzugsweise dann weiter vorgesehen ist, dass eine erste Thermo-Kontaktseite des wenigstens einen Peltierelementes in Wärmeübertragungsverbindung mit dem Bodenbereich des ersten Gehäuses steht und eine zweite Thermo-Kontaktseite des wenigstens einen Peltierelements in Wärmeübertragungskontakt mit dem Abschlusselement steht.

Da im Allgemeinen Wärmetauscheranordnungen mit kreisartiger Form bereitgestellt werden, ist es zur möglichst effizienten Unterbringung des Thermostromgenerators vorteilhaft, wenn das wenigstens eine Peitierelement, bezogen auf einen Zetralbereich des Bodenbereichs des ersten Gehäuses, eine ringartige oder spiralartige Konfiguration aufweist.

Die Wärmequelle kann beispielsweise einen Brenner umfassen.

Die vorliegende Erfindung betrifft ferner ein Heizgerät, insbesondere Standheizung oder Zusatzheizer für ein Fahrzeug, bei welchem Heizgerät eine erfindungsgemäße Wärmetauscheranordnung vorgesehen ist. Dabei ist vorzugsweise weiter vorgesehen, dass der Bodenbereich des ersten Gehäuses mit seiner Innenseite einem Austrittsbereich eines Flammrohrs einer als Brenner ausgebildeten Wärmequelle gegenüberliegend positioniert ist. Es ist auf diese Art und Weise gewährleistet, dass die auf sehr hohe Temperaturen erwärmten Gase unmittelbar auf einen Bereich des ersten Gehäuses auftreffen, in welchem auch eine thermische Kontaktierung mit dem Thermostromgenerator besteht.

Die Erfindung wird nachfolgend mit Bezug auf die beiliegenden Zeichnungen detailliert beschrieben. Es zeigt:
- Fig. 1: eine schematische Schnittansicht eines Heizergätes, welches eine erfindungsgemäße Wärmetauscheranordnung aufweist;
- Fig. 2: eine Detail-Schnittansicht der bei dem Heizgerät der Fig. 1 eingesetzten Wärmetauscheranordnung.

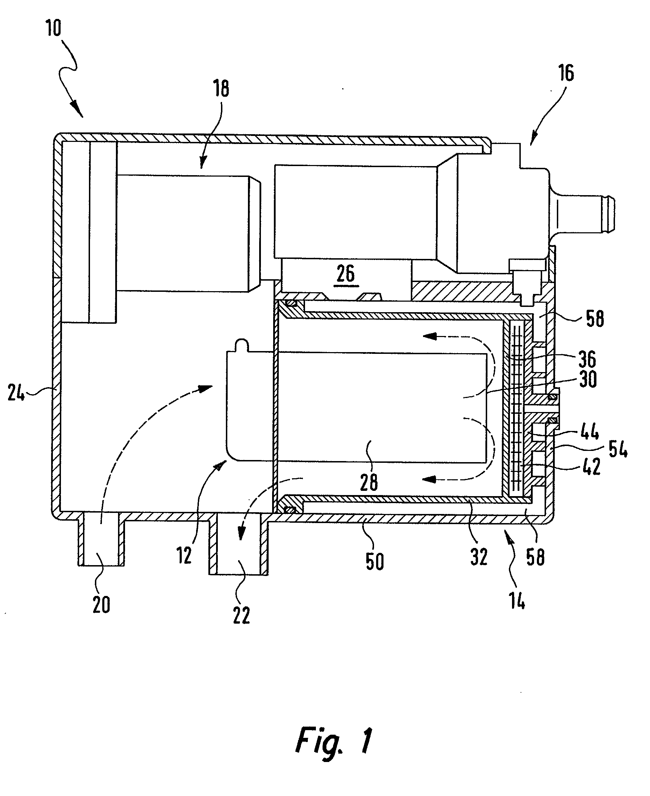

In Fig. 1 ist ein Heizgerät allgemein mit 10 bezeichnet. Dieses Heizgerät 10 kann beispielsweise als Standheizung oder Zusatzheizer in einem Kraftfahrzeug eingesetzt werden, um, je nach Betriebsart, den Fahrgastraum im Standbetrieb zu erwärmen oder das Kühlmedium einer Brennkraftmaschine schneller auf die erforderliche Betriebstemperatur zu bringen. Das in der Fig. 1 schematisch dargestellte Heizgerät 10 umfasst drei wesentliche Systembereiche. Dies ist zum einen der Brenner 12 mit der diesem zugeordneten und nachfolgend noch detaillierter beschriebenen Wärmetauscheranordnung 14. Einen weiteren Systembereich bildet die Pumpe 16, über welche das zu erwärmende, im Allgemeinen flüssige Medium, beispielsweise Wasser, in die Wärmetauscheranordnung 14 eingeleitet und auch wieder aus dieser abgezogen wird. Des Weiteren ist ein allgemein mit 18 bezeichnetes Gebläse vorgesehen, welches, wie durch Pfeile schematisch angedeutet, über eine Lufteinlassöffnung 20 zur Verbrennung vorgesehene Luft zum Brenner 12 fördert und auch dafür sorgt, dass die bei der Verbrennung entstehenden Abgase über eine Auslassöffnung 22 nach außen hin bzw. in ein Abgasreinigungssystem abgegeben werden. Diese verschiedenen Systembereiche 12, 14, 16, 18 sind in einem allgemein mit 24 bezeichneten Heizgerätegehäuse untergebracht. Hier kann eine modulartige Ausgestaltung des Heizgerätegehäuses 24 bzw. des gesamten Heizgeräts 10 vorgesehen sein, um für jeden der angesprochenen Systembereiche an die speziellen Betriebsanforderungen angepasste Systemmodule bereitstellen und zu der in der Fig. 1 erkennbaren Gesamteinrichtung zusammenfügen zu können. Durch diesen modulartigen Aufbau kann dafür gesort werden, dass für einen jeweiligen speziellen Einsatzzweck angepasst ein die erforderliche Heizleistung bereitstellendes und möglichst klein bauendes Heizgerät 10 vorgesehen wird. In dieses Heizgerät 10 kann zusätzlich dann auch noch das mit 26 bezeichnete Steuergerät eingefügt werden, welches zumindest den Betrieb des Brenners 12, idealerweise aber auch noch den Betrieb der Pumpe 16 und des Gebläses 18 steuert.

Hinsichtlich des Brenners 12 sei ausgeführt, dass dieser nach herkömmlicher Art und Weise aufgebaut sein kann, beispielsweise als Verdampferbrenner. Über ein Verdampfermedium, das beispielsweise vliesartig ausgebildet sein kann, oder über eine Einspritzdüse, wird Brennstoff in eine nicht dargestellte Brennkammer eingeleitet und dort mit der zugeführten Luft gezündet und zur Verbrennung gebracht. Die bei der Verbrennung entstehenden Abgase strömen entlang eines Flammrohrs 28, treten aus einem axial offenen Endbereich 30 desselben aus, werden dort in Achsrichtung umgeleitet und strömen dann zu der bereits angesprochenen Auslassöffnung 22. Es sei darauf hingewiesen, dass spezielle der Strömungsführung dienende Systembereiche, der Brennstoffzuführung dienende Systembereiche usw. in der Fig. 1 nicht dargestellt sind und von herkömmlicher Bauart sein können.

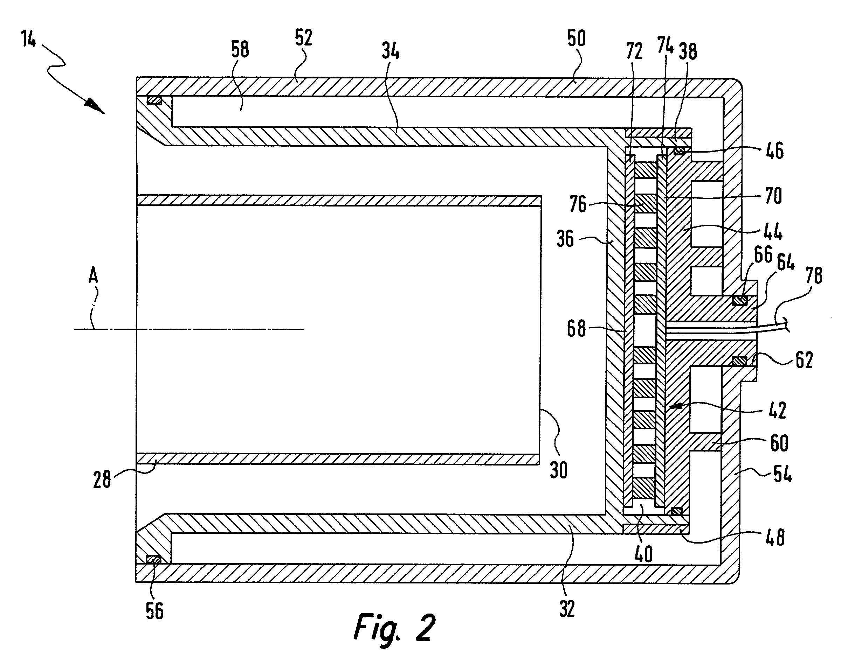

Der Wärmetauscherbereich 14 ist in Fig. 2 detaillierter dargestellt. Er umfasst ein inneres erstes Gehäuse 32, welches das Flammrohr 28 bzw. den in Fig. 1 dargestellten Brenner 12 umgebend angeordnet ist. Das Gehäuse 32 umfasst einen im Wesentlichen zylindrischen ersten Wandungsbereich 34, welcher sich unter Beibehaltung eines Abstands entlang des Flammrohrs 22 in der Richtung der Längsachse A desselben erstreckt. Der Wandungsbereich 34 schließt an einen Bodenbereich 36 an. Dieser zusammen mit dem Wandungsbereich 34 eine topfartige Gestaltung des Gehäuses 32 bereitstellende Bodenbereich 36 weist zu dem axial offenen Endbereich 30 des Flammrohrs 28 einen axialen Abstand auf, um den aus dem Flammrohr 30 heranströmenden Verbrennungsabgasen den Durchtritt bzw. die Umlenkung zu ermöglichen.

Das Gehäuse 32 weist einen zweiten Wandungsbereich 38 auf, der im Wesentlichen in axialer Verlängerung des Wandungsbereichs 34 vorgesehen ist und zusammen mit dem Bodenbereich 36 ebenfalls eine topfartige Struktur bildet. In den Innenraum 40 dieser topfartigen Struktur 40 ist ein allgemein mit 42 bezeichneter Thermostromgenerator eingesetzt. Eine Abschlussplatte 44 schließt den Innenraum 40 unter Mitverwendung einer O-ringartigen Dichtung 46 dicht ab. Hier kann beispielsweise am Außenumfangsbereich des zweiten Wandungsbereichs 38 ein durch Aufschrumpfen oder dergleichen vorgesehenes Befestigungsband 48 zum festen Zusammenfügen des Wandungsbereichs 38 mit dem Abschlussdeckel 44 dienen.

Es ist ferner ein äußeres zweites Gehäuse 50 vorgesehen, welches das erste Gehäuse 32 umgibt und ebenfalls eine topfartige Struktur mit einem Wandungsbereich 52 und einem Bodenbereich 54 aufweist. Im axialen freien Ende bildet der Wandungsbereich 52 mit dem ersten Wandungsbereich 34 des Gehäuses 32 unter Einsatz einer O-ringartigen Dichtung 56 einen flüssigkeitsdichten Abschluss. Es ist somit ein an die Form der Gehäuse 32, 50 angepasster Raumbereich 58 gebildet, in welchen, wie in Fig. 1 schematisch dargestellt, durch die Pumpe 16 das zu erwärmende Medium eingeleitet wird und aus welchem das nach Durchströmen des Raumbereichs 58 erwärmte Medium wieder abgezogen wird. Als zu erwärmendes Medium wird im Allgemeinen eine Flüssigkeit, wie z. B. Wasser, eingesetzt.

Die Abschlussplatte 44 weist an ihrer vom Bodenbereich 36 des Gehäuses 32 abgewandten und dem Bodenbereich 54 des Gehäuses 50 zugewandten Seite eine Mehrzahl von Abstützbereichen 60 auf, welche zum einen einen thermischen Kontakt zwischen der Abschlussplatte 44 und dem Bodenbereich 54 herstellen, zum anderen jedoch das Strömen des zu erwärmenden Mediums auch entlang der Abschlussplatte 44, d. h. zwischen den Bodenbereichen 36, 54, im Wesentlichen nicht behindern oder unterbinden. Ferner weist der Bodenbereich 54 eine Öffnung 62 auf, in welche ein Leitungsführungsabschnitt 64 der Abschlussplatte 44 eingreift. Auch hier kann ein O-ringartiges Dichtungselement 66 für einen fluiddichten Abschluss sorgen.

Der Thermostromgenerator 42 ist also, wie man in Fig. 2 deutlich erkennt, mit seinen beiden Wärmekontatkierungsseiten 68, 70 im Wesentlichen fest zwischen dem Bodenbereich 36 des Gehäuses 32 und der Abschlussplatte 44 gehalten. Hier können beispielsweise zwei plattenartige Anlageelemente 72, 74 vorgesehen sein. Zur Thermostromerzeugung können beispielsweise Peltierelemente 76 eingesetzt werden. Diese erzeugen bei Anlegen einer Temperaturdifferenz an diese durch den so genannten Seebeckeffekt eine Thermospannung. Diese kann zum Betreiben verschiedener Systemkomponenten, insbesondere auch zum Bereitstellen der für das Heizgerät 10 erforderlichen elektrischen Energie genutzt werden. Zumindest im Startbetrieb ist es jedoch erforderlich, zusätzlich externe Energie zum Betreiben der verschiedenen Systembereiche, insbesondere zum Erregen eines Glühzündstifts oder dergleichen, bereitzustellen.

Um den zur Verfügung stehenden Bauraum bzw. die zur Verfügung stehenden Oberflächen so effizient als möglich zu nutzen, können die Thermoelemente 76 bezüglich eines zentralen Bereichs des Bodenbereichs 36, durch welchen hindurch im Wesentlichen die imaginäre Längsachse A geht, ringartig oder spiralartig angeordnet sein. Dies ist insbesondere daher vorteilhaft, da derartige Wärmetauscheranordnungen 14 im Allgemeinen mit bezüglich der Längsachse A näherungsweise kreisrunder Kontur ausgebildet sind. Es ist selbstverständlich möglich, hier andere Geometrien des Thermostromgenerators bereitzustellen, wenn diese für eine optimiertere Ausnutzung der zur thermischen Kontaktierung bereitstehenden Oberflächen geeignet sind. Durch die doppelte topfartige Ausgestaltung des Gehäuses 32 wird für den Thermostromgenerator 42 im Bereich zwischen den Bodenbereichen 36, 54 der beiden Gehäuse 32, 50 auch unter Einsatz der Abschlussplatte 44 ein zu dem Raumbereich 58 dicht abgeschlossener Raum 40 bereitgestellt, in welchen weiterhin ohne Probleme eine elektrische Anschlussleitung 78 für den Thermostromgenerator 42 geführt werden kann. Der Thermostromgenerator 42 steht somit an seiner Wärme-Kontaktierseite 68 in Wärmeübertragungskontakt mit einem im Verbrennungsbetrieb sehr stark erhitzten Bereich, nämlich dem Bodenbereich 36 des Gehäuses 32, auf welchen direkt die sehr heißen Verbrennungsabgase auftreffen. An der anderen Seite des Thermostromgenerators 42 ist dieser in Wärmeübertragungskontakt mit einer Komponente, nämlich dem Abschlussdeckel 44, der von dem zu erwärmenden Medium umströmt wird, welches eine deutlich niedrigere Temperatur aufweist, als die auf den Bodenbereich 36 auftreffenden Verbrennungsabgase. Der Thermostromgenerator 42 ist also in einem Systembereich sehr hoher Temperaturdifferenzen vorgesehen und kann somit bei gleichwohl sehr guter Bauraumausnutzung in optimaler Weise zur Erzeugung elektrischer Energie beitragen. Aufgrund der Positionierung in einem Bereich sehr hoher Temperaturdifferenzen kann der Thermostromgenerator 42 mit vergleichsweise kleiner Baugröße bereitgestellt werden, was überdies das Eingliedern der in Fig. 2 dargestellten Wärmetauscheranordnung in ein modulartig aufgebautes Heizgerät erleichtert.

## Patentansprüche

1. Wärmetauscheranordnung für ein Heizgerät, insbesondere Standheizung oder Zusatzheizer eines Fahrzeugs, umfassend ein erstes Gehäuse (32), welches mit einem Bodenbereich (36) und einem ersten Wandungsbereich (34) eine Wärmequelle (12, 28) wenigstens bereichsweise umgebend zu positionieren ist, wobei an einer von der Wärmequelle (12, 28) abgewandten Außenseite des Bodenbereichs (36) ein Thermostromgenerator (42) vorgesehen ist.

2. Wärmetauscheranordnung nach Anspruch 1, **dadurch gekennzeichnet, dass** der Bodenbereich (36) zusammen mit einem zweiten Wandungsbereich (38) eine den Thermostromgenerator (42) wenigstens teilweise aufnehmende topfartige Sturktur bildet.

3. Wärmetauscheranordnung nach Anspruch 2, **dadurch gekennzeichnet, dass** der zweite Wandungsbereich (38) im Wesentlichen in Verlängerung des ersten Wandungsbereichs (34) vorgesehen ist.

4. Wärmetauscheranordnung nach Anspruch 2 oder 3, **dadurch gekennzeichnet, dass** ein Abschlusselement (44) vorgesehen ist, welches die den Thermostromgenerator (44) enthaltende topfartige Struktur abschließt.

5. Wärmetauscheranordnung nach Anspruch 4, **dadurch gekennzeichnet, dass** das Abschlusselement (44) in Zusammenwirkung mit dem zweiten Wandungsbereich (38) einen fluiddichten Abschluss bildet.

6. Wärmetauscheranordnung nach einem der Ansprüche 1 bis 5, **gekennzeichnet durch** ein zweites Gehäuse (50), welches das erste Gehäuse (32) wenigstens bereichsweise umgebend angeordnet ist und mit dem ersten Gehäuse (32) einen von zu erwärmendem Fluid zu durchströmenden Raumbereich (58) bildet.

7. Wärmetauscheranordnung nach Anspruch 4 und Anspruch 6, **dadurch gekennzeichnet, dass** das Abschlusselement (44) an dem zweiten Gehäuse (50) unter Beibehalt eines Fluidströmungsweges anliegt.

8. Wärmetauscheranordnung nach Anspruch 6 oder 7, **dadurch gekennzeichnet, dass** das Abschlusselement (44) einen durch das zweite Gehäuse (50) hindurchführenden Anschlussleitungsführungsbereich (64) aufweist.

9. Wärmetauscheranordnung nach Anspruch 8, **dadurch gekennzeichnet, dass** der Anschlussleitungsführungsbereich (64) von dem Abschlusselement (44) vorspringend ausgebildet ist und in eine Öffnung (62) eines Bodenbereichs (54) des zweiten Gehäuses (50) unter Erzeugung eines fluiddichten Abschlusses des Raumbereichs (58) eingreift.

10. Wärmetauscheranordnung nach einem der Ansprüche 1 bis 9, **dadurch gekennzeichnet, dass** der Thermostromgenerator (42) wenigstens ein Peltierelement (76) aufweist.

11. Wärmetauscheranordnung nach Anspruch 4 und Anspruch 10, **dadurch gekennzeichnet, dass** eine erste Thermo-Kontaktseite (68, 72) des wenigstens einen Peltierelementes (76) in Wärmeübertragungsverbindung mit dem Bodenbereich (36) des ersten Gehäuses (32) steht und eine zweite Thermo-Kontaktseite (70, 74) des wenigstens einen Peltierelements (76) in Wärmeübertragungskontakt mit dem Abschlusselement (44) steht.

12. Wärmetauscheranordnung nach Anspruch 10 oder 11, **dadurch gekennzeichnet, dass** das wenigstens eine Peltierelement (76), bezogen auf einen Zentralbereich des Bodenbereichs (36) des ersten Gehäuses (32), eine ringartige oder spiralartige Konfiguration aufweist.

13. Wärmetauscheranordnung nach einem der Ansprüche 1 bis 12, **dadurch gekennzeichnet, dass** die Wärmequelle (12, 28) einen Brenner (12) umfasst.

14. Heizgerät, insbesondere Standheizung oder Zusatzheizer für ein Fahrzeug, umfassend eine Wärmetauscheranordnung (14) nach einem der vorhergehenden Ansprüche.

15. Heizgerät nach Anspruch 14, **dadurch gekennzeichnet, dass** der Bodenbereich (36) des ersten Gehäuses (32) mit seiner Innenseite einem Austrittsbereich (30) eines Flammrohrs (28) einer als Brenner (12) ausgebildeten Wärmequelle (12, 28) gegenüberliegend positioniert ist.
